# EUROPEAN PATENT APPLICATION

(11) **EP 2 833 538 A1**
(43) Date of publication of application: **04.02.2015**
(21) Application number: 13382307.0
(22) Date of filing: 30.07.2013
(51) Int. Cl.: H02M 7/487, H02M 7/483, H02M 1/12, H02M 1/42

(54) **DC-link capacitor voltage balancing for clamped multilevel converter systems with active rectifier by means of reactive power**

(71) Applicant: Ingeteam Power Technology, S.A., 48170 Zamudio (ES)
(72) Inventor: Mazuela Larranaga, Mikel, 48170 ZAMUDIO (ES); Baraia Zubiaurre, Igor, 48170 ZAMUDIO (ES); Alvarez Hidalgo, Silverio, 48170 ZAMUDIO (ES); Atutxa Lekue, Iñigo, 48170 ZAMUDIO (ES)
(74) Representative: Igartua, Ismael

(57) **Abstract**

Multilevel power converting apparatus comprising an AFE rectifier (9), an inverter (5), a plurality of capacitors (C₁, C₂, C₃, C₄) connected in series forming a capacitor bank (6) as a DC voltage bus arranged between the rectifier (9) and the inverter (5), and a controller adapted for determining if there is an imbalance in the intermediate nodes (of, O₂, O₃). The controller increases the reactive power consumption of the rectifier (9) when they detect an imbalance in order to eliminate or reduce it, and the apparatus (100) comprises compensation means (7) for maintaining the power factor on the alternating-current system (101) as close as possible to the unit, which are arranged in parallel with the alternating-current system (101) and connected to the rectifier (9) and which comprise a behavior opposed to that of the rectifier (9) with respect to the reactive power consumption.

## Description

### TECHNICAL FIELD

The present invention is related to multilevel power converting apparatuses which have one or more intermediate nodes on the direct current side and require balancing the voltage in said intermediate nodes.

### PRIOR ART

Multilevel power converting apparatuses which are adapted for transforming direct voltage power into alternating voltage power and vice versa comprise at least one conversion step responsible for performing said action. The quality of the output voltage wave increases with the number of levels it comprises, although it is known that a greater number of levels results in an increased complexity in the implementation of the converter. The converter comprises a plurality of semiconductor type switches that are opened and closed by command to enable providing the corresponding voltage levels in a controlled manner using a specific modulation technique (PWM, SHE or SVM, for example).

One drawback of multilevel converters is that the voltages of the capacitors of the direct current side can become imbalanced due to the unbalanced charge distribution in the different capacitors of the direct current side.

In a three-level converter for example, the converter comprises two capacitors in series on the direct current side such that three voltage levels are obtained from a direct voltage: an intermediate level or zero potential at a connection mid-point between both capacitors, a positive level or potential corresponding to the voltage in a capacitor with respect to the mid-point, and a negative level or potential corresponding to the value of the voltage of the other capacitor with respect to the mid-point. Due to the mentioned drawback, the mid-point in a three-level converter can become imbalanced, i.e., the voltage between the terminals of the two capacitors may not be the same.

Document US 2008291708 A1 discloses a power converting apparatus with a three-level converter in which the voltage is balanced at the mid-point using at least one additional element to absorb or consume the excess power generated in the mid-point. Said element, which can be a resistance for example, absorbs or consumes the excess current going towards one of the capacitors, such that it allows maintaining the voltage at the mid-point in balance.

Document US 5627742 A discloses a power converting apparatus with a three-level converter in which the voltage is balanced at the mid-point without using additional elements. In the apparatus disclosed in this document, the control of the apparatus is acted on to obtain the balance, acting on the modulation used in the apparatus itself, taking into account the polarity of the output current of the apparatus.

This solution is specific for three-level converters, so it cannot be applied in a converter with more levels, five levels for example, where the converter comprises four capacitors in series on the direct current side and three intermediate nodes, each connection between two capacitors corresponding with a node. The five voltage levels correspond with the positive level or potential, the negative level or potential, and the voltage levels in each of the three intermediate nodes.

Document EP 2555411 A1 belonging to this applicant discloses a power converting apparatus comprising a plurality of capacitors arranged in series on the direct current side, an electronic power converter for converting the direct voltage supplied by the capacitors into at least one alternating-voltage signal by means of a specific modulation, and a controller for modifying the current at a connection mid-point between every two capacitors according to the direction of the slope and to the value of at least one output current of the apparatus.

Document US 20130114320 A1 discloses a power converting apparatus with a five-level converter. The apparatus comprises a specific device for balancing the voltage of the intermediate nodes of the converter, injecting charges into or extracting charges from the required capacitors depending on the imbalance which has been detected by means of a sensor detecting the voltages of the capacitors. The device comprises at least one electromagnetic coil and a plurality of specific switches and diodes for eliminating imbalance.

The paper "Diode-Clamped Multilevel Converters: A Practicable Way to Balance DC-Line Voltages" by Mario Marchesoni and Pierliuigi Tenca (IEEE Transactions on Industrial Electronics, Volume 56, pages 452-466, 2009) discloses a converter apparatus comprising a first end adapted for being connected to an alternating-current power supply system, a second end adapted for being connected to a load, a rectifier for rectifying the alternating-current power received through said first end, which is connected to the first end of the converter, an inverter which provides the load with the power demanded by said load and with the required power factor from the power rectified by the rectifier, and which is connected to the second end of the converter, a DC voltage bus between the rectifier and the inverter, comprising a plurality of capacitors connected in series to one another forming a DC voltage bus arranged between the rectifier and the inverter, each connection between two capacitors corresponding with an intermediate node, and a controller adapted for determining if there is an imbalance in the intermediate nodes according to the voltage of the different capacitors. The controller is also adapted for implementing a balancing strategy which consists of selecting the suitable redundant vector in each moment during the applied modulation in order to prevent using additional components for the elimination of the imbalance.

### DISCLOSURE OF THE INVENTION

The object of the invention is to provide a multilevel power converting apparatus as described in the claims.

The multilevel power converting apparatus of the invention comprises a first end adapted for being connected to an alternating-current power supply system, the power grid, a second end adapted for being connected to a load, a rectifier for rectifying the power received through the power grid of said first end and which is connected to the first end of the converter, an inverter which provides the load with the active power demanded by said load and with the required power factor from the power rectified by the rectifier, and which is connected to the second end of the converter, a DC voltage bus between the rectifier and the inverter comprising a plurality of capacitors connected in series to one another forming a capacitor bank arranged between the rectifier and the inverter, each connection between two capacitors corresponding with an intermediate node, and a controller adapted for determining if there is an imbalance in the intermediate nodes according to the voltage of the different capacitors.

The rectifier corresponds with an AFE (Active Front End) rectifier extracting the active power required by the load from the power grid and comprising a plurality of switches. The controller is adapted for performing the control and modulation of the AFE rectifier, such that certain modulation vectors are applied to meet the pre-established requirements. The modulation vectors define the turn-on and turn-off sequence of the switches of the AFE rectifier, and the pre-established requirements for an AFE type rectifier include supplying active power towards the inverter with an unitary power factor for the alternating-current power supply system. For a high modulation index and a high power factor it is not possible to balance the voltage of the intermediate nodes by means of modulation, so it is necessary to apply specific methodologies and/or components to solve this problem.

Reactive power consumption means that more current must circulate through the alternating-current system for supplying the required active power to the load. Therefore, it is desirable to reduce reactive power consumption, i.e., operating with an unitary power factor or with a power factor as close as possible to the unit for the alternating-current power supply system.

The converter apparatus of the invention is adapted for increasing the reactive power consumption of the AFE rectifier to gain capacity for correcting imbalance in the intermediate nodes, the power factor of said rectifier thus being modified. By increasing the reactive power consumption of the AFE rectifier, the power factor for the alternating-current system decreases, which would imply that the alternating-current system perceive this variation in its power factor. To prevent it or to at least reduce as much as possible the increase of reactive power demanded from the system, the apparatus comprises compensation means which are arranged in parallel to the alternating-current system and which are connected to the input of the rectifier, for the purpose of aiding the alternating-current system to not perceiving the reduction in the power factor of the AFE rectifier required to assure the balance of the intermediate nodes. The compensation means behave in a manner opposed to the behavior of the AFE rectifier with respect to the reactive power consumption, such that the increase in reactive power consumption of the AFE rectifier, or at least in part, is provided by the compensation means avoiding this demand from the alternating-current system, so the alternating-current system does not perceive a reduction in the power factor (or in case it perceives it, this reduction in the power factor is less than the reduction that would correspond due to an increase in reactive power consumption of the AFE rectifier).

From the alternating-current power supply system point of view, the converter apparatus ideally operates at unitary power factor, therefore, thanks to the action of the compensation means, the reactive power requirements from the alternating-current system are minimized when the rectifier changes its reactive power consumption. Consequently, the converter apparatus of the invention allows assuring the balancing (or reducing the imbalance until a required point) of the intermediate nodes in a wide operation range of the load and under different conditions of the alternating-current system, providing an unitary power factor demand (or a power factor as close as possible to the unit) from the alternating-current system.

These and other advantages and features of the invention will become evident in view of the drawings and the detailed description of the invention.

### DESCRIPTION OF THE DRAWINGS

Figure 1 schematically shows a single-line diagram of a preferred embodiment of the converter apparatus of the invention.
Figure 2a shows the maximum and minimum currents that can be synthesized by the rectifier and by the inverter in the first intermediate node of the converter apparatus of Figure 1 at some specific operating conditions.
Figure 2b shows the maximum and minimum currents that can be synthesized by the rectifier and by the inverter in the second intermediate node of the converter apparatus of Figure 1 at some specific operating conditions.
Figure 2c shows the maximum and minimum currents that can be synthesized by the rectifier and by the inverter in the third intermediate node of the converter apparatus of Figure 1 at some specific operating conditions.
Figure 3 shows the relationship between the capacitive values of the compensation capacitor of the converter apparatus of Figure 1 with respect to the conditions of the load (in this case with respect to the power factor).

### DETAILED DESCRIPTION OF THE INVENTION

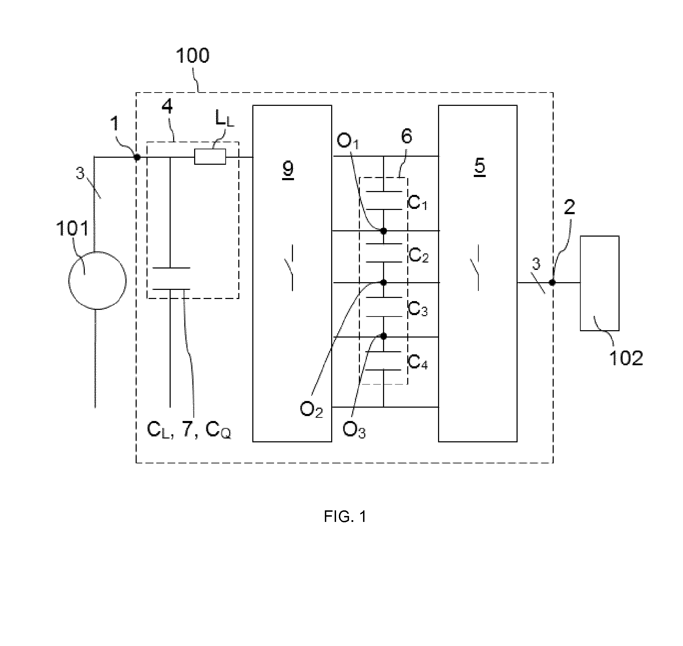

Figure 1 schematically shows a single-line diagram of an embodiment of the multilevel converter apparatus 100 of the invention. The apparatus 100 comprises a first end 1 adapted for being connected to an alternating-current power supply system 101 (the power grid) and a second end 2 adapted for being connected to a load 102.

The apparatus 100 comprises a rectifier 9 which is connected to the first end 1 of the apparatus 100, an inverter 5 which is connected to the second end 2 of the apparatus 100 and a DC voltage bus between the rectifier 9 and the inverter 5 comprising a plurality of capacitors C₁, C₂, C₃ and C₄ in series connection forming a capacitor bank 6 arranged between the rectifier 9 and the inverter 5. Each connection between two capacitors C₁, C₂, C₃ and C₄ corresponds to an intermediate node O₁, O₂ and O₃.

The apparatus 100 additionally comprises a controller not depicted in the drawings which is adapted for determining if there is an imbalance in the intermediate nodes O₁, O₂ and O₃ according to the voltage of the different capacitors C₁, C₂, C₃ and C₄, and it can comprise some detection means (not depicted in the drawings) for detecting the voltage of the capacitors C₁, C₂, C₃ and C₄. In the embodiment shown in the drawings, the apparatus 100 comprises five levels, the capacitor block 6 of the DC voltage bus thus comprising four capacitors C₁, C₂, C₃ and C₄. In the embodiment shown in the drawings, the apparatus 100 comprises three intermediate nodes O₁, O₂ and O₃, the intermediate nodes O₁, O₂, O₃ corresponding, respectively, with the connection points between two capacitors C₁, C₂, C₃ and C₄ of the capacitor bank 6. In other embodiments, the apparatus 100 may have more or fewer levels, thus comprising more or fewer capacitors and more or fewer intermediate nodes.

The inverter 5 provides the load 102 with the active and reactive power demanded by said load 102, with the corresponding power factor thereof. The rectifier 9 is responsible for extracting the active power needed by the inverter 5 from the alternating-current system 101 to cover the demand of the load 102, and said active power is sent to the inverter 5 through the direct voltage bus. The rectifier 9 used is of the AFE (Active Front End) type, using switches of the turn-on and turn-off controlled semiconductors type. This allows controlling the opening and closing of the main switches by means of modulation, which may be adapted at least for reducing or eliminating harmonics (or the amplitude thereof), i.e., at least for forcing the input currents demanded from the alternating-current system 101 to be roughly sinusoidal and with an unitary power factor for the alternating-current system 101.

The apparatus 100 comprises a controller (not depicted in the drawings) both for controlling and modulating the AFE rectifier, which is responsible for managing the opening and closing orders of the switches in a controlled manner, according to specific variables, such that certain modulation vectors are obtained in order to achieve the pre-established requirements. The modulation vectors define the on and off switching sequence of the switches of the AFE rectifier, and among the pre-established requirements for an AFE type rectifier include supplying active power towards the inverter with an unitary power factor consumption for the alternating-current system. The inverter 5 also comprises a plurality of switches whose turn-on and turn-off switching is controlled by means of the controller, and said controller is responsible for managing the power transfer between the alternating-current system 101 and the load 102 in a coordinated manner by acting over the orders of the semiconductor type switches of both the rectifier 9 and the inverter 5. The operation, modulation, control and configuration or composition of a rectifier/inverter of this type is not detailed since it is already known in the state of the art.

As mentioned previously, the controller is adapted for determining the presence or absence of an imbalance in the intermediate nodes O₁, O₂ and O₃ according to the voltages of the capacitors C₁, C₂, C₃ and C₄: If said voltages differ among them in a certain range, the controller determines that there is an imbalance. The apparatus 100 of the invention is adapted for eliminating the imbalance (or reducing it at a great extent) in a simple and effective manner, furthermore providing several additional advantages as mentioned below.

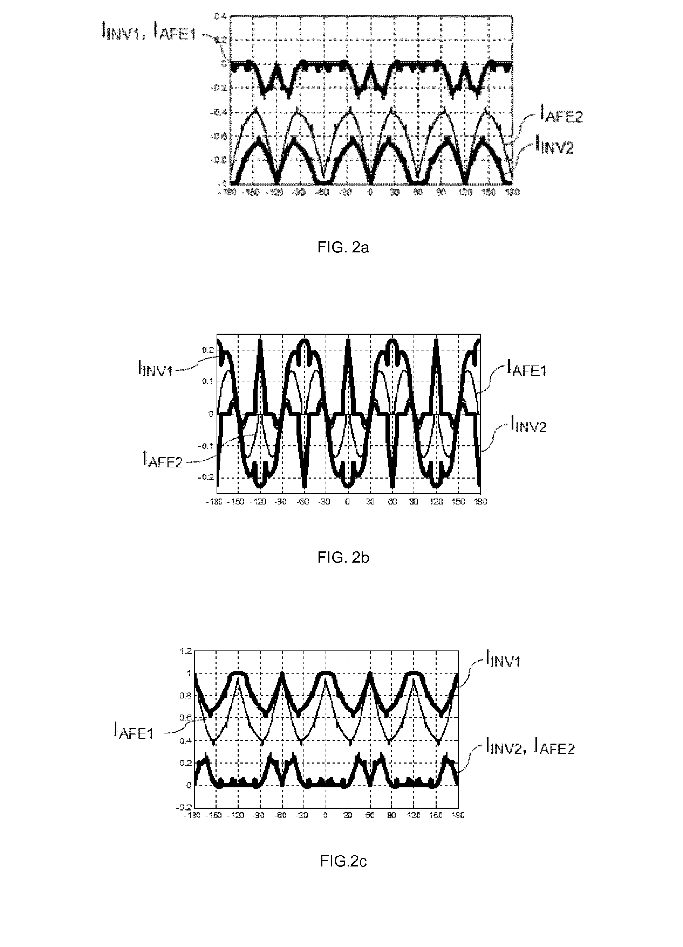

It has been identified that the variation in the power factor of the AFE rectifier 9 provides an advantageous behavior with respect to the balancing of the intermediate nodes O₁, O₂ and O₃ of the DC voltage bus. The smaller the power factor in the AFE rectifier 9 the greater the capacity to control the mean value of the current of the intermediate nodes O₁, O₂ and O₃, as explained below in reference to the example of Figures 2a - 2c:
1. In the intermediate nodes O₁ and O₃ (Figures 2a and 2c) the maximum and minimum currents that can be synthesized by the rectifier 9 become close to the maximum and minimum currents that can be synthesized by the inverter 5 in said intermediate nodes O₁ and O₃. Therefore, the currents in an intermediate node, required by the rectifier 9 and the inverter 5, are slightly different, which allows the rectifier 9 to compensate for the current extracted in an intermediate node O₁ or O₃ by the inverter 5, and vice versa, and consequently balancing the voltage in said intermediate node O₁ or O₃.
2. In the intermediate node O₂ (Figure 2b) the currents that can be synthesized by the rectifier 9 can have either positive or negative values, which improves the self-balancing capacity of said intermediate node O₂.

In Figures 2a - 2c:
x-axis: Phase angle within a 360° period.
y-axis: Current of the corresponding node.
I_{INV1:} Maximum current that can be synthesized by the inverter 5.
I_{INV2:} Minimum current that can be synthesized by the inverter 5.
I_{AFE1}: Maximum current that can be synthesized by the rectifier 9.
I_{AFE2}: Minimum current that can be synthesized by the rectifier 9.

Figures 2a - 2c were obtained from several specific operating conditions of the rectifier 9 and of the inverter 5, in this case for modulation indexes of 0.88 and 0.8 of the rectifier 9 and of the inverter 5 respectively, and for an unitary power factor both for the rectifier 9 and for the inverter 5, although the invention is applicable to any other conditions that may be required (these were used only as an example to illustrate the possibilities).

In the apparatus 100 of the invention, the controller is adapted in order to increase the reactive power consumption of the rectifier 9 when an imbalance is detected with the aim of eliminating the imbalance in the nodes O₁, O₂ and O₃, the power factor of the rectifier 9 thus being reduced.

If the power factor of the rectifier 9 is modified, more reactive power will be demanded from the alternating-current system 101. To avoid this behavior, or reduce the effect thereof, the apparatus 100 of the invention comprises compensation means 7 which are arranged in parallel to the alternating-current system 101 and which are connected to the input of the rectifier 9, for the purpose of aiding the alternating-current system 101 to not perceiving the reduction in the power factor of the rectifier 9. To that end, the compensation means 7 are configured to behave in a manner opposed to the behavior of the AFE rectifier 9 with respect to the reactive power consumption, such that the reactive power demanded by the rectifier 9 is provided, or at least in part, by the compensation means 7, avoiding this demand from the alternating-current system 101.

Therefore, a suitable selection of the compensation means allows the reactive power demanded by said compensation means 7 to be sufficient so as to change the power factor of the rectifier 9 as much as necessary in order to assure the correct balance of the intermediate nodes O₁, O₂ and O₃ of the direct voltage bus in a wide operating range of the load 102 and voltage variations in the alternating-current system 101, all this causing the alternating-current system 101 to not perceiving, or perceiving with a smaller effect than in the case where there were no compensation means 7, in the cases the rectifier 9 requires a power factor different from the unit power factor.

From the reactive power consumption point of view, when the AFE rectifier 9 increases the reactive power consumption it behaves like an inductance, such that the compensation means 7 correspond with a compensation capacitor C_{Q} since it behaves in the opposed manner of an inductance in terms of reactive power. The reactive power demanded by the rectifier 9 from the alternating-current system 101 is thus provided, at least in part, by the compensation capacitor C_{Q}, such that it prevents demanding at least that part of reactive power from the alternating-current system 101, as already mentioned above. Therefore, the alternating-current system 101 to which both the rectifier 9 and the compensation capacitor C_{Q} are connected perceives an unitary power factor demand from the rectifier 9 - compensation capacitor C_{Q} as a whole (or at least with a smaller reduction than in the case where there were no said compensation capacitor C_{Q}), achieving the elimination or the reduction at a great extent of the imbalance of the intermediate nodes O₁, O₂ and O₃ in a simple and effective manner, without affecting the capacity to offer active power to the load 102 (or at least reducing its effect at a great extent).

In the preferred embodiment, the apparatus 100 comprises an input filter 4 for reducing the harmonic content of the input current of the rectifier 9. The input filter 4 is arranged between the first end 1 of the apparatus 100 and the rectifier 9 and corresponds to an LC filter comprising a capacitor C_{L} and an inductance L_{L}. As a result of using an input filter 4, in the preferred embodiment the rectifier 9 would not be directly connected to the first end 1 of the apparatus 100, but would rather be connected to said first end (1) through (or by means of) the input filter 4 (through the inductance L_{L}).

In the preferred embodiment, the compensation capacitor C_{Q} corresponds to the capacitor C_{L} of the input filter 4, such that the apparatus 100 of the invention does not require additional components for balancing the voltage of the intermediate nodes O₁, O₂ and O₃ without affecting the capacity to collect active power from the alternating-current system 101 (or at least the effect thereof being reduced at a great extent). The compensation capacitor C_{Q} (capacitor C_{L} of the input filter 4) is sized to enable requiring a specific reactive power, and not only taking into account its filtering function. As a result, the sizing of the inductance L_{L} of the input filter 4 is adapted to the sizing of the compensation capacitor C_{Q} so that the relation between said inductance L_{L} and said compensation capacitor C_{Q} (capacitor C_{L} of the input filter 4) continue to fulfill the function of input filter 4. The alternating-current system 101, to which the rectifier 9 is connected through the input filter 4, perceives an unitary power factor demand from the rectifier 9 - input filter 4 as a whole (or at least with a smaller reduction than in the case where there was no such compensation capacitor C_{Q}), i.e., if the capacitor C_{L} of the input filter 4 would have not been sized taking into account the possible increase of the reactive power consumption of the rectifier 9 due to the balancing requirements), achieving the elimination or the reduction at a great extent of the imbalance of the intermediate nodes O₁, O₂ and O₃ in a simple and effective manner.

In summary, in the preferred embodiment the input filter 4 demands a permanent reactive power from the alternating-current system 101, and the rectifier 9 adapts its power factor so that the input filter 4 - rectifier 9 as a whole operates at unitary power factor from the alternating-current system 101 point of view. Having sized the input filter 4 in order to demand the amount of reactive power required by the rectifier 9 for assuring the balancing of the intermediate nodes O₁, O₂ and O₃ in a wide range of conditions of the alternating-current system 101 and of the load 102, the rectifier 9 modifies its power factor in said extent such that the input filter 4 - rectifier 9 as a whole operates at unitary power factor from the alternating-current system 101 point of view, and this greater modification entails an increase in the reactive power consumption of rectifier 9, which increases the control capacity of the rectifier 9 (by means of the modulation) for balancing the voltages of the intermediate nodes O₁, O₂ and O₃.

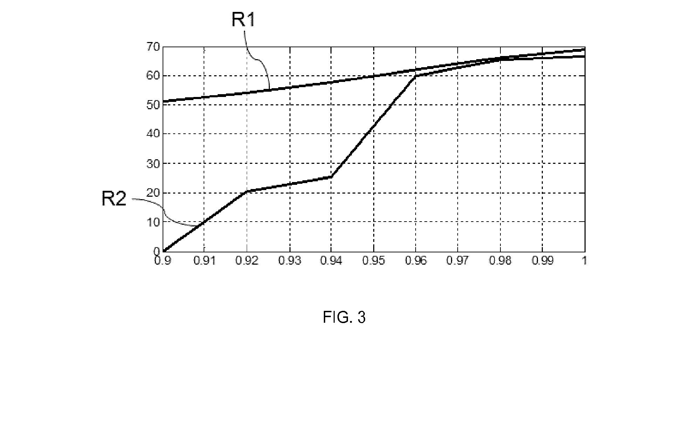

When sizing the capacitor C_{L} (compensation capacitor C_{Q}) the conditions of both the alternating-current system 101 (e.g., possible voltage variation in alternating-current system 101) and the load 102 (e.g., output voltage, power factor) must be taken into account, as shown in Figure 3. Figure 3 shows the value of the compensation capacitor C_{Q} (and therefore of the capacitor C_{L}) necessary according to the conditions of the load 102 (power factor, x-axis) for different voltage variations in alternating-current system 101 assuring the operation of the apparatus 100 with unitary power factor for the alternating-current system 101. Said graph was obtained by means of analytical expressions and the analysis by simulation of the complex behavior of the AFE rectifier 9 - inverter 5 system. Said Figure 3 shows two curves R1 and R2 for the values of the compensation capacitor C_{Q}, the specific values corresponding with the curve R1 for a voltage variation in the alternating-current system of ±5%, and the specific values corresponding with the curve R2 for a voltage variation in the alternating-current system of ±1%.

## Claims

1. Multilevel power converting apparatus with voltage balancing, comprising a first end (1) adapted for being connected to an alternating-current power supply system (101), a second end (2) adapted for being connected to a load (102), an AFE (Active Front End) rectifier (9) for rectifying the alternating-current power received through said first end (1), which is connected to the first end (1) of the converter (100) and extracts the active power required by the load (102) from the alternating-current system (101), an inverter (5) which provides the load (102) with the power demanded by said load (102) and with the required power factor from the power rectified by the rectifier (9), and which is connected to the second end (2) of the converter (100), a DC voltage bus between the rectifier (9) and the inverter (5) comprising a plurality of capacitors (C₁, C₂, C₃, C₄) connected in series forming a capacitor bank (6) arranged between the rectifier (9) and the inverter (5), each connection between two capacitors (C₁, C₂, C₃, C₄) corresponding with an intermediate node (O₁, O₂, O₃), and a controller adapted for determining if there is an imbalance in the intermediate nodes (O₁, O₂, O₃) according to the voltage of the different capacitors (C₁, C₂, C₃, C₄), **characterized in that** the controller is adapted for increasing the reactive power consumption of the AFE rectifier (9) when they detect an imbalance in the intermediate nodes (O₁, O₂, O₃) in order to eliminate or reduce said imbalance, and **in that** the converter apparatus (100) comprises compensation means (7) for maintaining the power factor on the alternating-current system (101) as close as possible to the unit, which are connected to the alternating-current system (101) and connected to the input of the rectifier (9) and comprising a behavior opposed to that of the AFE rectifier (9) with respect to the reactive power consumption.

2. Apparatus according to claim 1, wherein the rectifier (9) behaves like an inductance with respect to the reactive power consumption, the compensation means (7) comprising a compensation capacitor (C_{Q}).

3. Apparatus according to claim 2, comprising an input filter (4) which is arranged between the first end (1) of the converter (100) and the rectifier (9) and which corresponds with an LC filter comprising a capacitor (C_{L}) and an inductance (L_{L}), the compensation capacitor (C_{Q}) corresponding with the capacitor (C_{L}) of the input filter (4).

4. Apparatus according to claim 3, wherein the compensation capacitor (C_{Q}) is sized to enable requiring a specific reactive power, the inductance (L_{L}) of the input filter (4) being adapted to said sizing of the compensation capacitor (C_{Q}) so that the relation between said inductance (L_{L}) and said compensation capacitor (C_{Q}) fulfills the function of an input filter (4).
